# EUROPEAN PATENT SPECIFICATION

(11) **EP 2 103 370 B1**
(45) Date of publication and mention of the grant of the patent: **02.05.2012**
(21) Application number: 08425166.9
(22) Date of filing: 17.03.2008
(51) Int. Cl.: B23D 21/14

(54) **Apparatus for shearing hollow cylindrical bodies**
Vorrichtung zum Abscheren von zylindrischen Körpern
Appareil de cisaillement de corps cylindriques creux

(43) Date of publication of application: 23.09.2009
(73) Proprietor: Martinenghi S.r.l., 20060 Albignano d'Adda (MI) (IT)
(72) Inventor: Messa, Giovanni,, 20060 Albignano d'Adda (MI) (IT)
(74) Representative: Marietti, Andrea

(56) References cited:
- WO-A-89/02794
- GB-A- 1 555 114
- US-A- 3 646 840

## Description

The present invention refers to an apparatus and a method to shear hollow cylindrical bodies having a substantially circular section, preferably of the metallic type, such as cans or bottles, according to the preamble of claims 1 and 14.

The shearing of a hollow cylindrical body having a substantially circular section, usually metallic, for example obtained by extrusion or drawing, is a cutting operation on the hollow cylindrical body that provides the removal of a terminal annular portion of the cylindrical body itself, at its open end, to shear the top edge and allow its subsequent closing, for example by seaming, with an appropriate cap or valve.

Apparatuses are known to shear hollow cylindrical bodies comprising at least one supporting cylinder (for example a mandrel) on which a hollow cylindrical body is placed axially and retained, at least one blade, usually outside the cylindrical body and moveable reversibly in engagement with the outer surface of the cylindrical body, one counter-blade integral to the supporting cylinder at the axial position wherein such a cylindrical body is intended to be cut, as well as means for rotationally operating the supporting cylinder and/or the blade in relative motion reciprocally.

Such an apparatuses are further provided with an ejection assembly of the annular swarf resulting from the shearing, usually comprising an axial cursor having annular shape, substantially coaxial to the supporting cylinder, acting as a pusher for the swarf itself.

For example, the U.S. Patent 3.878.743 in the name of FISHER concerns to an apparatus, of the afore mentioned type, provided with more than one cutting heads, each of them comprising a mandrel, rotating around its own axis and disposed to retain the hollow cylindrical body during the cutting, a fixed blade radially placed relatively to the mandrel and associated with a counter-blade of which the mandrel is provided with, as well as an ejector for the annular swarf, placed around the mandrel, and operated with reciprocating motion, by axial shift. Such an apparatus, whose axial shiftingly operations are realized by a pneumatic circuit, provides that at the end of the cutting step, realized by imposing a rotary motion to the mandrel relatively to the fixed blade, the sheared hollow cylindrical body is drawn by the mandrel itself and the subsequent axial operation of the ejector would cause the removal of the annular swarf from this latter.

Likewise the FISHER Patent, the U.S. Patent 3.646.840, which is considered to disclose the features of the preamble, in the name of CONTINENTAL CAN CO. describes an apparatus for shearing metallic cans wherein a retaining collar rotationally operates and bears the can in process, while an axially shiftable arm bears a counter-blade that is fitted and removed from the inside of the can during and after the cutting, respectively. The apparatus further comprises a stationary blade and a beat ring, axially moveable too, for the annular swarf ejection. After the cutting, the shiftable arm with the counter-blade is drawn from within the can and, contemporaneously, the beat ring will throw out the annular swarf.

In such an apparatuses, the annular swarf removal is sometimes rather complicated and with some drawbacks. Indeed, because of the limited gaps between the annular swarf and the mandrel (or the relative counter-blade), sometimes it happens that such an annular swarf, immediately after the cutting, is disposed so not to be coaxial to the mandrel axis, thereby obstructing, or even impeding, the subsequent action of ejecting the swarf.

To solve such a drawback it is known to provide the apparatus for shearing hollow cylindrical bodies with a further cutting tool that, at the end of the shearing operation, is intended to cut the annular swarf in a direction substantially orthogonal to the cylindrical body, then allowing its simple ejection.

For purpose of illustration, the U.S. Patent 3.400.620 in the name of ARMBRUSTER describes an apparatus for shearing extruded cans that provides, for every rotating mandrel on which the can to be sheared is supported, some cutting edges, driven by a cam to be radially moveable, and mounted on the same mandrel at the annular portion of the can waste. Such cutting edges are operated, before the shearing cut, by an arm inside the mandrel engaging a cam element. After the shearing action, the annular swarf, already cut, may be removed by a suction system.

A similar solution, wherein for every mandrel or cylinder supporting the can there is an outer blade to cut the annular swarf resulting from the shearing operation, before its ejection, is also described in the British Patent Application GB 1 457 622 in the name of STANDUN or in the U.S. Patent 3.972.299, in the name of THE STOLLE CO.

Although such a solution solves the problem found in the apparatuses provided uniquely with an ejector, the cutting blades used to sever the annular swarf involves an increase of the maintenance operations of the apparatus itself, because of the necessary substitution of such cutting blades due to wear effect after a certain amount of operating cycles, an increase of the apparatus complexity itself, due to the required precision for the annular swarf cutting, and furthermore a certain slowing down of the swarf ejection operations, forasmuch as, after the shearing cut, such cutting edges must be first engaged with the swarf, then the latter has to be cut for its complete axial length, subsequently the cutting edges must be disengaged from the swarf, and at last the ejection assembly of the swarf itself has to be operated.

The French Patent Application FR 2 716 394 in the name of HERLAN provides that a cutting blade would rotate, in a planetary way, around the supporting cylinder of the hollow cylindrical body to be sheared and that an appropriate separating roller, with a counter-roller integral to the afore said supporting cylinder, divides the annular swarf and then allows its ejection by an air suction system.

In this case too, the HERLAN apparatus maintenance may reveal rather burdensome because of the separating roller wear, and the annular swarf cutting may further reveal inaccurate because of a specific cutting edge absence.

GB-A-1 555 114, to METAL BOX Co. LTD, discloses a method for shearing a hollow cylindrical body having a substantially circular section in which, after trimming said hollow cylindrical body, the resulting waste annular portion of the cylindrical body is broken before its removal.

It therefore an object of the present invention to provide an apparatus, and a corresponding method, for shearing a hollow cylindrical body, having substantially a circular section, that would not reveal the drawbacks of the known previous art.

It is therefore an object of the present invention to realize an apparatus for shearing the hollow cylindrical bodies that allows an easy removal of the annular swarf resulting from the cutting, from the mandrel or the supporting cylinder, of the same cylindrical body and at the same time does not involve laborious maintenance operations and/or the undue wear of the parts arranged for the cutting.

A further object of the present invention is to provide a method for shearing the hollow cylindrical bodies, wherein the removal of the corresponding annular swarf is aided, without however involving the cutting of the swarf itself.

These and other objects are obtained by the apparatus for shearing hollow cylindrical bodies according to the first independent claim and the subsequent dependent claims and by the method for shearing a hollow cylindrical body according to the twenty fourth independent claim and the subsequent claims therefrom dependent.

The apparatus for shearing hollow cylindrical bodies having a substantially circular section, according to the present invention, comprises an outer frame, at least one supporting cylinder to bear the hollow cylindrical body in process, at least one blade and a counter-blade externally and internally associated, or vice versa, to the hollow cylindrical body, wherein such a blade or counter-blade is constrained to the afore said supporting cylinder, at least one ejection assembly for the annular swarf provided with at least one ejector that is shiftable relatively to the supporting cylinder, as well as a first device for rotationally operating, around the axis of the supporting cylinder, the blade relatively to the hollow cylindrical body, or vice versa, and a mechanism to shiftingly operate the ejector along a direction that is parallel to the axis of the supporting cylinder. Advantageously, such an ejector assembly further comprises means to reversibly expand, along a direction substantially incident to the axis of the supporting cylinder, at least part of that its surface engaging the annular swarf being placed in proximity of said blade or counter-blade constrained to the supporting cylinder

It has to be observed that herein and after with the elocution "surface engaging the annular swarf" it is intended any portion belonging to, or associated with, the lateral surface of the supporting cylinder of the apparatus being intended to support, at least temporarily, for example in some shearing operation steps, such an annular swarf. Therefore, such an engaging surface coincides preferably with, or it is associated to, regions of the supporting cylinder only temporarily intended to bear the annular swarf.

Preferably, according to an aspect of the present invention, such expansion of at least part of the surface engaging the annular swarf provides the temporary widening of at least part of such a surface from a rest configuration, with a diameter of said part of the engaging surface substantially smaller than the diameter of the hollow cylindrical body, to an operative position, with a diameter of the afore said part of the engaging surface bigger or equal to that of the blade or counter-blade constrained to the supporting cylinder.

Such a solution, as the skilled of the art may easily deduce, allows to aid the ejection of the annular swarf, widening (that is deforming outwards) and/or centering relatively to the supporting cylinder axis, the engaging surface, along the corresponding ejection path, of the annular swarf itself, immediately before, or substantially contemporaneously, its axial ejection from the supporting cylinder of the cylindrical body in process, by the afore said axially shiftable ejector. The widening outwards of the ejection path of the annular swarf allows to avoid that the latter, during its shifting run along the supporting cylinder, may misalign and block, by friction, against the outer surface of the blade or counter-blade constrained to the same supporting cylinder.

Particularly, in case wherein the counter-blade is integral with the supporting cylinder, and then places itself inside the cylindrical body in process, the mechanical widening of the ejecting path of the annular swarf at least in proximity of the counter-blade itself, before and during its ejection along the supporting cylinder axis of the hollow cylindrical body, allows to use the counter-blade as a centering element of the hollow cylindrical body, improving the cutting quality, without such a counter-blade becoming an obstacle for the swarf ejection.

According to a preferred aspect of the present invention, the means to expand the engaging surface of the annular swarf comprise at least one segment, axially extended, and associated to the outer surface of the supporting cylinder of the hollow cylindrical body, presenting one its end reversibly moveable along a direction incident to the supporting cylinder axis and facing outwards relatively to the latter. Such means further comprise a mechanism to drive the movement of such an end of the afore said segment along such a direction incident to the supporting cylinder, moving away or closer to the axis of the latter.

The moving away from, and the subsequent re-approaching to, the supporting cylinder axis by the afore said segment, arranged at the annular swarf, that is at the cutting blade, allows to easily widen such an engaging surface for the annular swarf along its ejection path.

The mechanism to drive the segment movement along an incident direction to the supporting cylinder, moving away or closer the axis of the latter, may preferably comprise a cursor provided with, at the afore said segment, an inclined plane complementary with an inclined plane of which the widening segment of the annular swarf is provided with. The mutual engagement and disengagement of such an inclined planes causes the movement away or closer to (approaching) the supporting cylinder axis, respectively, of the afore said segment (or an end thereof).

According to a preferred aspect of the present invention, the operation of the mechanism to drive the movement of the widening segment of the annular swarf, as well as the mechanism driving the ejector, is mechanically determined, by a cam and corresponding followers system. Such mechanisms, belonging to the afore said ejection assembly, are besides moved by the same motor means. According to another aspect of the present invention, is provided a method to shear a hollow cylindrical body, having a substantially circular section, according to independent Claim 14.

It has to be observed that the term "expand" it is used in this patent with the general meaning of widening outwards, from a position with a smaller dimension (diameter), to a position with a bigger dimension (diameter), a certain surface that, specifically, is part of the outer surface of the afore said supporting cylinder for the hollow cylindrical body in process, or it is associated to such an outer surface of the supporting cylinder.

According to a preferred aspect of the method of the present invention, such an expansion happens temporarily widening said engaging surface part for the annular swarf from a rest configuration with a substantially smaller diameter than the diameter of the hollow cylindrical body, to an operative position with a bigger diameter or, preferably, equal to that of the same hollow cylindrical body, and particularly an operative position with bigger diameter of the blade or counter-blade diameter constrained to the support for the hollow cylindrical body in process.

Such a method, keeping in mind that the blade or the counter-blade placed inside the hollow cylindrical body in process has a diameter only slightly smaller than the diameter of the same hollow body, allows, as described yet, an easy shearing of a hollow cylindrical body and an efficient action of removal and ejection of the corresponding annular swarf.

For purposes of illustrations and not limitative a preferred embodiment of the apparatus and a relative shearing method according to the present invention will be described with reference to the accompanying drawings, in which:
- figure 1 is lateral section view of an apparatus according to a preferred embodiment of the present invention;
- figure 2 is a lateral section view of a detail of the apparatus of figure 1 ;
- figure 3 is a front partial section view of the apparatus of figure 1;

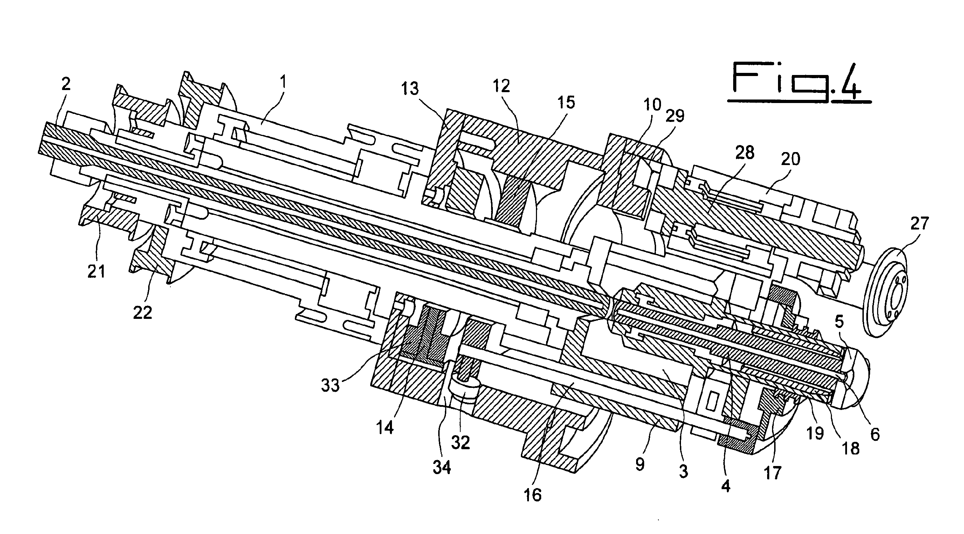

- figure 4 is a prospective view, partially sectioned, of the apparatus of the preceding figures, with the highlighted sliding ejector of the ejection assembly of the apparatus itself; and
- figure 5 is a prospective view, partially sectioned, of the apparatus of the preceding figures, with highlighted means to widen the annular swarf belonging to the afore said ejection assembly.

Making reference to the figures as a whole, the apparatus for shearing metallic hollow cylindrical bodies having substantially circular section, as cans for example, or metallic bottles, according to a particular embodiment of the present invention, comprises a static frame 1, or mounting, on which is revolvingly mounted a drum 3 having a cutting assembly 20 and a supporting cylinder 4 for the can, or bottle, in process.

The supporting cylinder 4, in the particular embodiment herein illustrated, is idly mounted to the frame 1 so that it can freely rotate around its axis, and the drum 3, to which the cutting assembly 20 is just constrained, is rotationally operated around the axis of the supporting cylinder 4, by a driven wheel 21 and a motion drive cylindrical shaft. The wheel 21 and the corresponding motion drive shaft to the drum 3 are in turn rotationally constrained on the same frame 1 and they are furthermore kinematically coupled, for example by a reduction unit, to appropriate motor means.

Alternatively, such a supporting cylinder 4 may be mounted fixedly on the frame 1, without thereby compromising the optimal operation of the whole apparatus.

According to such a structure, the cutting assembly 20, provided with a blade 27, is moved by a "planetary" motion around the supporting cylinder 4, thanks to the rotary drum 3, and the can, or metallic bottle, shearing operation happens thanks to the relative rotation of the blade 27 relatively to the can itself, or the bottle, in process.

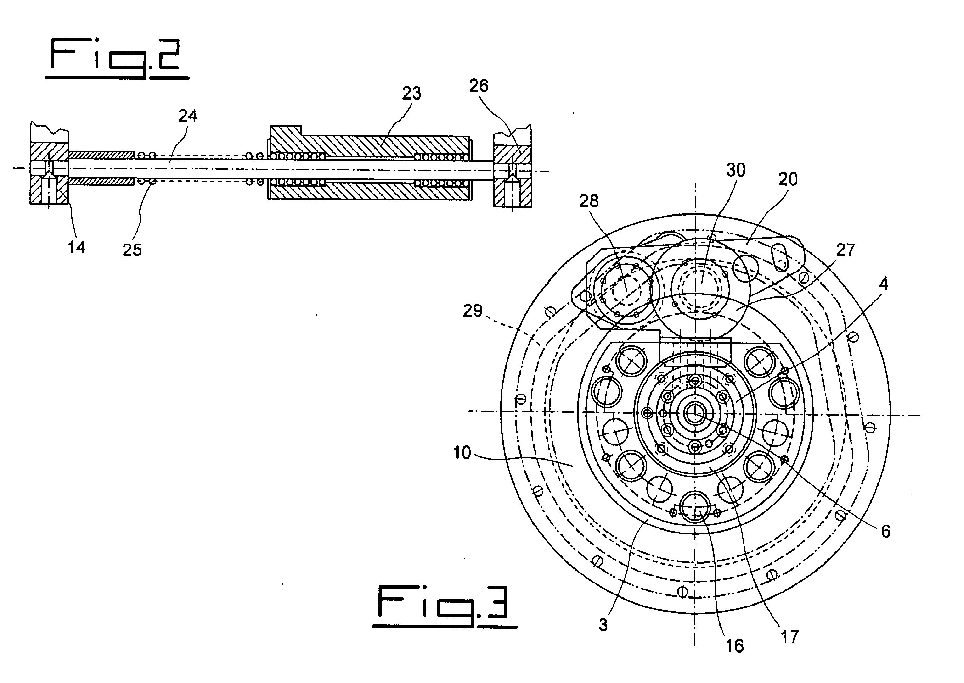

More in detail, the cutting assembly 20, as particularly visible in figure 3, comprises a fulcrum lever, by an axis 28, to the drum 3 and provided with a cutting 27 circular blade (or discoidal cutting edge), idly revolvingly mounted, thanks to a pivot 30, on the swinging arm of the lever itself. Such a lever of the cutting assembly 20 further comprises a follower 11, integral with the corresponding swinging arm, adapted to engage into a guide groove 29 of a disk 10, acting as a cam element, revolvingly constrained to the frame 1 too.

The guide groove 29 of the cam element 10 is shaped (see its configuration in dotted line in figure 3) such that, during the follower 11 rotation into such a guide 29, the cutting blade 27 arises and lowers relatively to the supporting cylinder axis 4, as a function of the relative angular position reached by the drum 3 relatively to the cam element 10. The cam element 10 of the apparatus herein illustrated is substantially discoidal and it is rotationally operated too relatively to the frame 1, around the supporting cylinder axis 4 of the can, or bottle, in process, thanks to a driven wheel 22 and a corresponding motion drive shaft.

The cutting blade 27, therefore, is animated by a rotationally motion of its pivot 30 around the supporting cylinder axis 4 (planetary motion), thanks to the drum 3, by a shifting motion in a substantially radial direction (or anyway incident), moving closer or away from the cylinder axis 4, thanks to the lever 20 and to the coupling between the follower 11 of this latter and the corresponding guide groove 29 of the cam element 10, as well as a rotation motion, free and caused by the frictions between the blade 27 and the can, or bottle, in process, around its own pivot 30, during the cutting step.

The follower 11, operatively associated to the blade 27, the corresponding cam element 10 and the guide groove 29 of the same cam element 10, as well as the device to rotationally operate the cam element 10 relatively to the frame 11, constitute the means to regulate the movement of the blade 27 along a direction incident to the supporting cylinder axis 4 during the operation of the cylindrical body to be sheared.

Both the motion drive shaft from the driven wheel 21 to the drum 3, and the motion drive shaft from the wheel 22 to the cam element 10, are coaxially mounted, and in a way freely to rotate, in the particular embodiment of the present invention herein shown, on a fixed pivot 2 of the frame 1, having the axis coincident with the supporting cylinder axis 4 of the hollow cylindrical body in process. Consequently, because of the apparatus symmetry herein described, the supporting cylinder 4 and pivot 2 axis constitutes the apparatus axis, around which the various bodies, drums or cams, of the apparatus itself rotate.

The supporting cylinder 4, being idly mounted as mentioned, for example by ball bearings 8, on the frame 1, has, substantially in proximity of its free end, a counter-blade 5 intended to couple, during the cutting action, with a blade 27 and thereby rendering possible an extremely precise cut of the can, or bottle, in process. Further the counter-blade 5 has a diameter substantially equal, or smaller by a few tenth of a millimeter, to the can or bottle diameter to be sheared, so as it acts also as a centering element for the can, or bottle, itself. The supporting cylinder 4, in turn, presents a smaller diameter of the can or bottle diameter in process, so as it doesn't constitute an obstacle for the inserting operation of such a can or bottle to be sheared within the apparatus of the present invention.

The substitution of the counter-blade 5, and eventually of the cam element 10, allows to rapidly adapt the apparatus herein described to the shearing of the hollow cylindrical bodies having different diameters.

Both the supporting cylinder 4, and the corresponding counter-blade 5, have a axially-developing bore 6 that is fluidically connected to a corresponding axial bore 7, obtained in the pivot 2, in turn connected to a feeding air flow generator.

It has to be noted that, although the apparatus herein illustrated by way of example provides an idle support 4 for the cylindrical body in process and a planetary motion, regulated by a suitable cam element, for the cutting blade 27, any other solution that provides the relative motion between the cylindrical body in process and the cutting blade, for example the use of a rotating mandrel as a support for the cylindrical body and of a blade radially shiftable only, may be likewise implemented, without therefore falling out from the protection scope of the claims below.

As a further example, the use of a support 4 fixed to the frame 1 of the apparatus herein claimed, and of a cutting blade 27 driven by a planetary motion around such a support 4, is a preferred solution falling in the protection scope herein requested.

Herein and below it has further to be noticed that with the term "counter-blade" it has to be intended any element designed to directly or indirectly cooperate with the cutting blade, through the hollow cylindrical body in process, to allow the shearing operation progress. According to such a definition, the "counter-blade" may be for example a simply retaining checking element of the cylindrical body countering, although indirectly, the cutting blade action, or may be some sort of annular anvil, as in the case herein described, for the cutting blade, or, more, may coincide at least partially with the supporting cylinder of the body in process, if such a supporting cylinder carries out - because of its shape and/or its dimensions - a countering and/or cooperating action with the cutting blade.

The apparatus 1 herein described is further provided with an ejection assembly for the annular swarf resulting from the shearing cut, comprising a cursor 17, having an annular shape, coaxial to the supporting cylinder 4 and shifting along the axis of the supporting cylinder 4 itself, as well as means 14, 18, 19, 23, 24, 25, 26 to expand, along a direction substantially incident to the supporting cylinder 4 axis, that surface, next to the counter-blade 5, on which the annular swarf resulting from the can or bottle shearing in process is leant, at least temporarily, during its ejection. The expansion happens from a rest configuration, wherein such an engaging surface adopts a diameter substantially smaller than the diameter of the hollow cylindrical body in process, to an operative position, wherein the afore said engaging surface adopts a bigger diameter or, preferably, equally to the diameter defined by the counter-blade 5, constrained to the supporting cylinder 4.

More in detail, the ejection cursor 17 (or simply ejector), that in the embodiment herein illustrated is particularly comprised of a ring with slices circumferentially retained by a filiform spring, and then being at least partially elastically deformable in the radial direction relatively to the supporting cylinder 4, is axially operated by a plurality of driving rod 16 having an axial direction, that is with an axis parallel with the axis of the cylinder 4 supporting the can, or bottle, in process, which driving rods 16 have the corresponding ends engaging the ejector 17 and are arranged along a circumference coaxial to the afore said supporting cylinder 4 (see figure 3).

Every driving rod 16, sliding within a sleeve 9 integral to the drum 3 of the apparatus herein described, is integrally constrained both with at least a corresponding slice of the ejection cursor 17, by a ring 31 connected to the ejector 17 itself, and with a disk 15, having its center on the apparatus axis, and sliding mounted coaxially to the pivot 2. The disk 15 further comprises a follower 32, radially placed relatively to the apparatus axis, adapted to engage into a guide groove 34 of a cam 12, integral to the afore mentioned cam element 10. Therefore the cam 12 is rotationally operated around the apparatus axis too by the driven wheel 22, and its guide groove 34, obtained substantially along the circumference having center over the afore said apparatus axis, is shaped to oblige, thanks to the follower 32, an axial shift with reciprocating motion, first in a sense and after in the counter-sense, to the rods 16 driving the ejector 17.

The cams 10 and 12 afore described, being preferably reciprocally integral, may be realized enbloc, as a whole.

Advantageously the ejection assembly, as already described, comprises as well means to reversibly expand, radially outwards the supporting cylinder 4, at least part of that surface, next to the counter-blade 5, on which the annular swarf resulting from the shearing of the hollow cylindrical body in process is engaged, at least in some of the shearing operation steps and particularly during the corresponding ejection by the afore said ejector 17.

Such an engaging surface portion for the annular swarf may belong to the supporting cylinder 4 itself, and may coincide with a portion of the lateral surface of this latter, otherwise, as in the apparatus herein shown, may belong to an element extraneous to the cylinder 4, however coupled to at least part of the lateral surface of such a cylinder 4, preferably next to the counter-blade 5.

The afore said means for reversible expansion of part of the engaging surface for the annular swarf, in the particular embodiment of the invention herein illustrated, comprise axial segments 19, or fingers, arranged at the outer lateral surface of the supporting cylinder 4, at least next the afore said counter-blade 5, having such dimensions to be at least partially covered by the hollow cylindrical body - can or bottle - in process. Each of such segments 19 presents at least one end, placed in proximity of the counter-blade 5, elastically deformable, or otherwise reversibly moveable, in radial direction relatively to the supporting cylinder 4 axis, moving away outwards from the latter.

Such means for expanding at least part of the engaging surface of the annular swarf of the present invention further comprise preferably a mechanism 13, 14, 33, 23, 24, 25, 26 to drive the segment 19 movement radially outwardly. Such a mechanism comprises an annular cursor 18 coaxially mounted to the supporting cylinder 4, shiftably along the axis of the latter, and arranged below the segments 19, so as to be able to axially slide relatively to the latter. Such a cursor 18 comprises, at one of its ends, an outer inclined plane coupling, during the relative sliding, to a complementary inclined plane of which each segment 19 is provided with, internally.

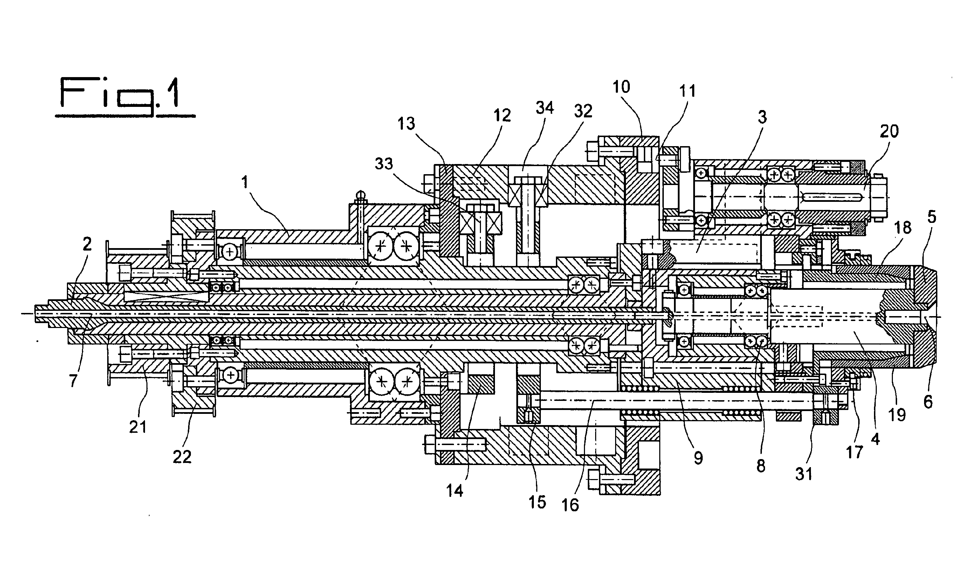

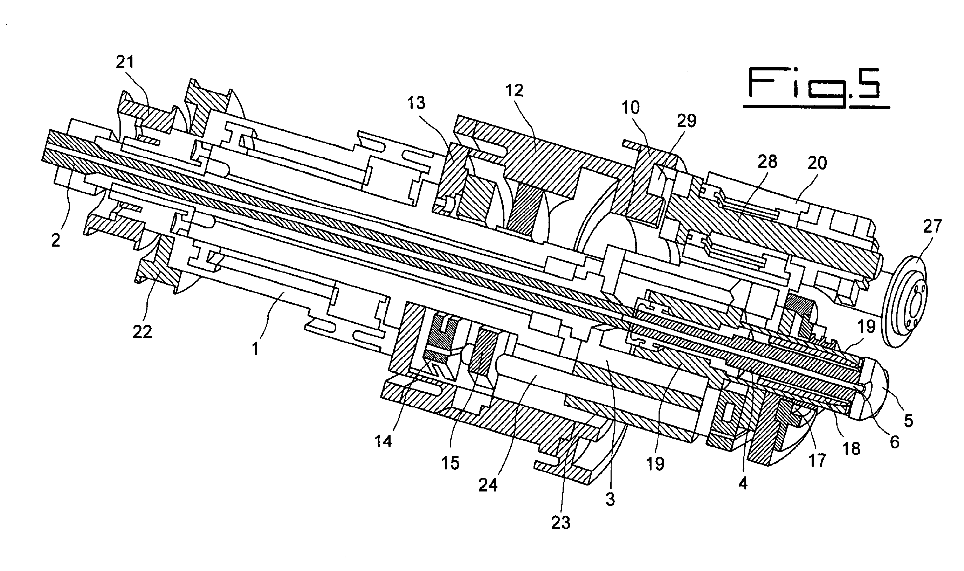

Particularly, as visible in figures 1 and 5, the cursor 18 presents, at its end closest to the counter-blade 5, an outwards inclined plane, relatively to the apparatus axis, coupling with a complementary inclined plane, that is inclined in the opposite direction, arranged on the inner surface of each segment 19, in proximity of its end closest to the counter-blade 5. Then the movement in the axial direction, towards the counter-blade 5, of the cursor 18 causes the gradual engagement of the afore said inclined planes, to the extent in which the two tops of the latter will coincide, determining the temporary raising of the elastic (or moveable) ends of the segments, or fingers, 19.

It has to be noted that the raising of the elastic ends of the segments 19 alone causes a sort of truncated cone ring, with the major base having a diameter substantially equal or bigger than the diameter of the counter-blade 5 and arranged in proximity of this latter, and with the minor base having a diameter substantially equal to the sum of the diameter of the annular cursor 18 with the thickness of the segment 19 (the sum is less than the counter-blade 5 diameter), and arranged far away from such a counter-blade 5, so that to determine a sliding surface having a gradual leading edge for the annular swarf, during its ejection run generated by the ejector 17.

It has to be observed that, alternatively, in a possible embodiment herein not shown, all the segments 19 may be raised, in their whole, in parallel to the supporting cylinder 4 axis, thereby determining, in such an expanded configuration, a widen annular cylinder having a diameter equal or bigger than the diameter of the counter-blade 5.

The annular cursor 18 is axial shiftingly operated by rods 24, connected at their end to a ring 26, in turn integral with the cursor 18, and arranged along a direction parallel to the apparatus axis, with the corresponding ends placed along the circumference having the center on the apparatus axis itself. Such rods 24, retained by sleeves 23 integral to the frame 1, are further constrained, at the other end, to a disk 14, coaxially mounted to the pivot 2, in a sliding manner relatively to this.

In addition the rods 24 pass through the disk 15 (see figure 5), coupling with the latter in a freely sliding manner.

Further the disk 14 is provided with a follower 33 engaging a axial-developed guide of which a discoidal element 13 is provided with, acting as a cam for the afore mentioned follower 33 and being rotationally operated, integrally with the cam element 10 and the cam 12, around the apparatus axis by the driven wheel 22.

The axial guide of the cam element 13 is shaped so that to force the rods 24 to shifting movements along the supporting cylinder 4 axis, to the counter-blade 5, the movements being countered by a return spring 25, interposed between the afore said sleeve 23 and the disk 14 itself.

The axial motion of the rods 24 towards the "head" of the supporting cylinder 4 (that is towards the counter-blade 5), determined by the movement of the follower 33 over the corresponding axial-developed guide of the discoidal cam element 13, thereby causes the corresponding shift of the annular cursor 18 in the same sense of the rods 24, the mutual engagement of the inclined planes of the latter with the segments 19, or fingers, and at last, the radial raising, relatively to the supporting cylinder 4 axis, of such fingers 19, or better of the corresponding elastic ends.

As before mentioned yet, the cam 10, 12, and 13 rotation relatively to the apparatus frame 1 herein described happens contemporaneously, because of the integral fixing constrain between them, and thanks to the driven wheel 22, while the drum 3 rotation, and then of the cutting assembly 20, relatively to the frame 1 itself, is determined by the driven wheel 21. The rotation of the cams 10, 12, 13 and of the drum 3 does not occur at the same angular speed, because the cutting assembly 20, and particularly the blade 27, must have cut yet the waste ring (annular swarf) from the cylindrical body in process, and then concluded yet a complete turn around the axis of the supporting cylinder 4, before the cams 12 and 13, will drive the operation of the swarf ejection assembly. In the embodiment herein illustrated, particularly, the ratio between the speed of drum 3 and the speed of cams 10, 12, and 13 is 3 : 2, that is every three turns of the drum 3 two turns of the cams 10, 12, and 13 will be completed.

Particularly it has to be observed that the guide groove 29 of the cam element 10 is shaped to allow the cutting edge 27 engagement with the hollow cylindrical body in process, that is the can or bottle, so that to allow the complete cutting of the annular swarf, before the ejection assembly operation of the latter.

The apparatus operation herein shown is as follows.

The can, or bottle, insertion to be sheared in the apparatus happens, with the known inserting/removing devices, herein not described, along the axis of the supporting cylinder 4. The inner diameter of the can, or bottle, in process and the diameter of the counter-blade 5 are defined such that the can, or bottle, is substantially retained and centered on the supporting cylinder 4, or better on the segments 19, when not deformed, mounted on such a supporting cylinder 4 - that is in turn idly mounted on the frame 1 of the apparatus herein illustrated - thanks to the counter-blade 5 too.

During the inserting operation of the hollow cylindrical body to be worked on the corresponding supporting cylinder 4, an air jet running through the bore 7 into the pivot 2 and reaching the through hole 6 into the same supporting cylinder 4 is opposing such an insertion, preventing that a possible over-run of the hollow cylindrical body in process would occur, relatively to what intended by the apparatus shape, and likewise preventing that dust or dirt could enter into the hollow cylindrical body while the latter is in place during the process.

After that such an inserting operation is ended, the relative rotation of the drum 3 relatively to the frame 1 and the cam element 10, rotating relatively to the frame 1 too, determines not only the cutting blade 27 rotation around the hollow cylindrical body in process, but furthermore, thanks to the follower 11 sliding into the groove 29 of the cam element 10, and the consequent rotation of the mobile arm of the cutting lever 20 around its own pivot 28, the approach of the same blade 27 to the supporting cylinder 4, in functional coupling with the counter-blade 5 to carry out the shearing cut of the same hollow cylindrical body in process.

At the end of the cutting operation, once the annular swarf is made, the guide groove 29 of the cam element 10, obviously thanks to the different angular speeds of the drum 3 and cams 10, 12 and 13, will determine the moving away of the cutting blade 27 from the supporting cylinder 4, while the cam 12 and 13 rotation relatively to the corresponding followers 32 and 33 will cause the progressive operation of the ejection mechanism.

During such a step, the inserting/removing device of the can, or bottle, outside the shearing apparatus, in a way in itself known, and herein not described, is operated in such a way to remove the sheared can, or bottle, from the supporting cylinder 4. The air ejected from the head of the supporting cylinder 4, thanks to the ducts 6 and 7, aids such a removing operation.

It has to be noticed that the annular swarf resulting from the cutting blade 27 action in cooperation with the counter-blade 5, is substantially laid over the supporting cylinder 4, or better over the afore said segments 19, inwards the apparatus, that is upstream the counter-blade 5 relatively to the base of the latter, just in proximity of such segments, or fingers, 19. The shift along the axis of the supporting cylinder 4 of such an annular swarf is obstructed by an apposite pusher that, further than being responsible of the hollow cylindrical body mounting on the supporting cylinder 4, acts during working of the back end (that is the opposite one to that end leading the support 4) of the same hollow cylindrical body, thereby preventing undue shifts.

The cams 12 and 13 are shaped so that, during their rotation relatively to the shiftable disks 15 and 14, the rods 24 are first axial shiftingly operated towards the counter-blade 5, thereby determining the corresponding shift of the annular cursor 18 and, thanks to the afore mentioned complementary inclined planes, the raising of the segments 19 relatively to the axis of the supporting cylinder 4, and only subsequently the ejector 17 is operated. Such a raising of the segments 19, in the whole working cycle occupying a relatively short time, is sufficient to expand that surface portion, next to the counter-blade 5, on which the annular swarf is leant, at least temporarily, during its ejection, until it will reach a diameter equal, or of some hundredths or tenths of millimeter bigger, than the counter-blade 5 diameter.

During such an expanding operation, the annular ejector 17, pushed by the corresponding rods 16 driven by the disk 15, in turn shiftingly moved by the cam 12, is forced to shift towards the head of the supporting cylinder 4, that is towards the counter-blade 5, thereby pushing the annular swarf to the outside of the supporting cylinder 4, going beyond the expanded surface by the fingers 19 and then the counter-blade 5, thereby de facto ejecting such a swarf. The radial elasticity of the particular ejector 17 of the apparatus afore described, aids to prevent that the latter could bash on with the counter-blade 5, or with the segments 19 or with other regions of the supporting cylinder 4, during the forward movement operation of the ejector 17.

During such an forward movement operation of the ejector 17, in addition, in the instants subsequent that wherein the annular swarf has passed the counter-blade 5, the cam element 13 allows to every return spring 25 to act on the corresponding rod 24, causing the latter to shift in the sense opposite to the head of supporting cylinder 4, and so withdrawing the annular cursor 18, with a consequent elastic return of the segments, or fingers, 19 in their not deformed shape.

When such an ejection ends, the guide groove 34 of the cam 12 further determines the withdrawal of rods 16 driving the ejector 17, which thereby returns in its initial position, allowing the inserting of a new hollow cylindrical body to be worked on the support 4 and then the new working cycle beginning.

Broadly speaking, also in the light of what afore described making reference to the apparatus shown in the figures, the method to shear a hollow cylindrical body, having a substantially circular section, according to the present invention, comprises the steps of:
a) inserting the hollow cylindrical body, for example a can, or a metallic bottle, in process between at least one blade 27 and a corresponding counter-blade 5, on an apposite support 4, along the direction of its own axis;
b) contacting the afore said blade 27 with the outer lateral surface of the cylindrical body;
c) rotationally operate the cylindrical body relatively to the blade 27, or vice versa, so that to cut off a waste (annular swarf) annular portion from the afore said hollow cylindrical body in process;
d) moving away the blade from the hollow cylindrical body;
e) removing such a cylindrical body by now sheared; and
f) ejecting the waste annular portion, not before having finished, or at least started, a step of:
g) expanding, along a direction substantially incident to the axis of the afore said cylindrical support, at least part of its engaging surface with the waste annular portion, along its ejection path, at least in proximity of the blade and/or counter-blade.

Preferably, such an expansion consists of a temporary widening of the bearing surface part for the annular swarf from a rest configuration, with a diameter substantially smaller than the hollow cylindrical body, to an operative position, with a diameter bigger or equal to that of the same hollow cylindrical body, and preferably with a diameter bigger or equal to that of the counter-blade 5.

Such a step g) of radial expansion, relatively to the support 4, of that surface on which the annular swarf is leant, begins before the step f) of ejection of such an annular swarf, but preferably - as seen - it continues during such a swarf ejection step too.

The swarf ejection may be realized, particularly, thanks to a thrust action exercised by an apposite ejector 17 on the afore said annular swarf, along an axial direction of the support 4, until the disengagement of such a swarf from the support 4 itself.

Obviously, the step a) of axially inserting the hollow cylindrical body (can or metallic bottle) on the corresponding support 4, provides the temporary integral mounting of the hollow cylindrical body in process on such a support 4, during the approach steps of the blade 27 and the subsequent shearing cut.

According to a particular aspect of the method herein described, the afore said step c) of rotationally operating the hollow cylindrical body in process (can or bottle) relatively to the blade 27, provides that the blade 27 is outer to the can or bottle in process and that this latter is idly revolving, whereas the afore said blade 27 is rotationally operated relatively to the cylindrical body to be sheared, around the axis of the latter, according to a so-called "planetary" motion.

As will be obvious for a person skilled in the art, the radial expansion of the surface on which the annular swarf is leant before its ejection along the supporting axis retaining the can, or the metallic bottle, in process, allows to easily execute, and particularly in a way without annular swarf jams, such an ejection, without therefore demanding further cutting actions of the same swarf.

## Claims

1. Apparatus for shearing hollow cylindrical bodies having a substantially circular section, of the type comprising a frame (1), at least one supporting cylinder (4) to bear at least part of a hollow cylindrical body, at least one blade (27) and a counter-blade (5) externally and internally associated, or vice versa, to said hollow cylindrical body, said at least one blade or said counter-blade (5) being constrained to said supporting cylinder (4), at least one annular swarf ejection assembly comprising at least one ejector (17) shiftable relatively to at least one supporting cylinder (4), as well as one first device (3, 21) for rotationally operating, around the axis of said supporting cylinder (4), said at least one blade (27) relatively to said hollow cylindrical body, or vice versa, and a mechanism (12, 15, 16, 31) to shiftingly operate said at least one ejector (17) along a direction parallel to the axis of said at least one supporting cylinder (4), **characterized in that** said ejection assembly comprises means (13, 14, 18, 19, 24, 25, 26, 33) to reversibly expand, along a direction substantially incident to the axis of the supporting cylinder (4), at least part of that its surface engaging said annular swarf, being placed in proximity of said blade or counter-blade (5) constrained to said supporting cylinder (4).

2. Apparatus according to claim 1, **characterized in that** said means (13, 14, 18, 19, 24, 25, 26, 33) to reversibly expand at least part of the engaging surface for said annular swarf are shaped to temporarily widen said at least part of said engaging surface from a rest configuration with a diameter substantially smaller than the diameter of said hollow cylindrical body, to an operative position with a diameter bigger or equal to that of said blade (27) or counter-blade (5) constrained to said supporting cylinder (4).

3. Apparatus according to claim 1 or 2, **characterized in that** said means for reversibly expanding the engaging surface for said annular swarf comprise at least one segment (19) externally associated to said at least one supporting cylinder (4), said segment (19) having at least one end reversibly moveable along a direction incident to said axis of said at least one supporting cylinder (4), as well as at least one mechanism (13, 14, 18, 24, 25, 26, 33) for driving the movement of said at least one end of said at least one segment (19) along said incident direction, moving away or closer to the axis of said at least one supporting cylinder (4).

4. Apparatus according to claim 3, **characterized in that** said at least one mechanism for driving the movement of at least one end of said at least one segment (19) comprises at least one axially shiftable cursor (18), said cursor (18) comprising a first inclined plane relatively associated in a sliding way to a second inclined plane complementary and integral to the inner wall of said at least one segment (19), in correspondence to said at least one of its end.

5. Apparatus according to claim 4, **characterized in that** said at least one cursor (18) is kinematically connected (24) to a follower (14, 33), in turn associated to a cam corresponding element (13), said cam element (13) being shaped to operate said at least one cursor (18) with reciprocating axial motion.

6. Apparatus according to claim 5, **characterized by** comprising a device (22) for rotationally operating said cam element (15) relatively to said follower (33).

7. Apparatus according to claim 5 or 6, **characterized in that** the follower (33) of said at, least one cursor (18) is integral with a disk (14) shiftable along the axis of said supporting cylinder (4).

8. Apparatus according to any one of the claims from 3 to 7, **characterized in that** said means for expanding the engagement surface of said annular swarf comprise a plurality of segment (19) having at least one raisable end, and said cursor (18) for driving the movement of said segments is a ring coaxial to said supporting cylinder (4).

9. Apparatus according to any one of the preceding claims, **characterized in that** said mechanism for shiftingly operating said at least one ejector (17) along a direction parallel to the axis of said at least one supporting cylinder comprises at least one follower (32), kinematically (16) connected to said ejector (17), and coupled to a corresponding cam (12, 34), said cam (12, 34) being shaped to operate said at least one ejector (17) with reciprocating axial motion.

10. Apparatus according to any one of the preceding claims, **characterized in that** said at least one ejector (17) comprises an annular body coaxially mounted to said at least one supporting cylinder (4).

11. Apparatus according to claim 9 or 10, **characterized by** comprising a device (22) for rotationally operating said cam (12, 34) relatively to said follower (32).

12. Apparatus according to claim 7 and 11, wherein said cam element (13) for the follower (33) of said cursor (18) of the mechanism for driving the movement of said at least one segment (19) and the cam (12, 34) for the follower (32) of said ejector (17) are reciprocally integral.

13. Apparatus according to any one of the preceding claims, **characterized in that** said counter-blade (5) is integral to the outer surface of said at least one supporting cylinder (4).

14. Method for shearing a hollow cylindrical body having a substantially circular section of the type comprising the steps of:
a) inserting said hollow cylindrical body between at least one blade and one relative counter-blade on a suitable cylindrical support along the direction of its own axis;
b) contacting said at least one blade with the lateral surface of said cylindrical body in correspondence to said corresponding counter-blade;
c) rotationally operate said cylindrical body relatively to said at least one blade, or vice versa, cutting off a waste annular portion from said hollow cylindrical body;
d) moving away said at least one blade from said cylindrical body;
e) removing said sheared cylindrical body; and
f) ejecting said waste annular portion; the method being **characterized by** comprising, before said step f) of ejecting the waste annular portion, a step of:
g) reversibly expanding, along a direction substantially incident to the axis of said cylindrical support, at least part of the engaging surface of said waste annular portion, in proximity of said blade and/or counter-blade, *to widen, by deforming outwards, said engaging surface* of *said waste annular portion, without cutting said waste annular portion.*

15. Method according to claim 14, **characterized in that** in said step g) reversibly expanding at least part of the engaging surface of said annular swarf happens from a rest configuration with a diameter of said at least part of the engaging surface substantially smaller than the diameter of said hollow cylindrical body, to an operative configuration with a diameter of said at least part of the engaging surface bigger or equal to that of said hollow cylindrical body.

16. Method according to claim 14 or 15, **characterized in that** said step f) of ejecting said waste annular portion provides a thrust step of said annular portion along its axial direction up to the disengagement from said suitable support.

17. Method according to any one of the claims from 14 to 16, **characterized in that** said step a) of axial inserting said hollow cylindrical body on said suitable support provides the temporary integral mounting of said hollow cylindrical body on said support during at least the subsequent steps b) and c) of said method.

18. Method according to any one of the claims from 14 to 17, **characterized in that** said step g) of expanding the engaging surface of said waste annular portion protracts to temporally coincide, at least partially, with said step f) of ejecting said waste annular portion.

## Patentansprüche

1. Vorrichtung zum Abscheren zylindrischer Hohlkörper mit im Wesentlichen kreisförmigem Querschnitt, wobei die Vorrichtung von derjenigen Art ist, die einen Rahmen (1) umfasst, wenigstens einen Trägerzylinder (4), um wenigstens einen Teil eines zylindrischen Hohlkörpers zu tragen, wenigstens ein Messer (27) und ein Gegenmesser (5), die außen und innen oder umgekehrt mit dem zylindrischer Hohlkörper verbunden sind, wobei das wenigstens eine Messer oder das Gegenmesser (5) am Trägerzylinder (4) gehalten wird, wenigstens eine ringförmige Spanauswurfgruppe, umfassend wenigstens einen Auswerfer (17), der bezüglich wenigstens eines Trägerzylinders (4) verschiebbar ist, sowie eine erste Einrichtung (3, 21) zur Drehbetätigung des wenigstens einen Messers (27) um die Achse des Trägerzylinders (4) relativ zum zylindrischen Hohlkörper oder umgekehrt und einen Mechanismus (12, 15, 16, 31) zur Schiebebetätigung des wenigstens einen Auswerfers (17) in Richtung parallel zur Achse des wenigstens einen Trägerzylinders (4), **dadurch gekennzeichnet, dass** die Auswerfergruppe Mittel (13, 14, 18, 19, 24, 25, 26, 33) umfasst, um in einer Richtung im Wesentlichen hin zur Achse des Trägerzylinders (4) wenigstens einen Teil der in die ringförmige Abspanung eingreifenden Fläche in der Nähe des am Trägerzylinder (4) gehaltenen Messers oder Gegenmessers (5) reversibel zu erweitern.

2. Vorrichtung nach Anspruch 1, **dadurch gekennzeichnet, dass** die Mittel (13, 14, 18, 19, 24, 25, 26, 33) zur reversiblen Erweiterung wenigstens eines Teils der Eingriffsfläche für die ringförmige Abspanung so geformt sind, dass wenigstens ein Teil der Eingriffsfläche aus einer Ruheanordnung mit einem Durchmesser, der im Wesentlichen kleiner ist als der Durchmesser des zylindrischen Hohlkörpers, vorübergehend zu einer Betriebsstellung mit einem Durchmesser erweitert wird, der größer als oder gleich dem des am Trägerzylinder (4) gehaltenen Messers (27) oder Gegenmessers (5) ist.

3. Vorrichtung nach Anspruch 1 oder 2, **dadurch gekennzeichnet, dass** die Mittel zur reversiblen Erweiterung der Eingriffsfläche für die ringförmige Abspanung wenigstens ein Segment (19) umfassen, das außen mit dem wenigstens einen Trägerzylinder (4) verbunden ist, wobei das Segment (19) wenigstens ein Ende aufweist, das in Richtung hin zur Achse des wenigstens einen Trägerzylinders (4) reversibel beweglich ist, sowie wenigstens einen Mechanismus (13, 14, 18, 24, 25, 26, 33) zum Antreiben der Bewegung des wenigstens einen Endes des wenigstens einen Segments (19) in dieser Einfallsrichtung, wobei es sich weg von oder näher hin zu der Achse des wenigstens einen Trägerzylinders (4) bewegt.

4. Vorrichtung nach Anspruch 3, **dadurch gekennzeichnet, dass** der wenigstens eine Mechanismus zum Antreiben der Bewegung des wenigstens einen Endes des wenigstens einen Segments (19) wenigstens einen axial verschiebbaren Läufer (18) umfasst, wobei der Läufer (18) eine erste geneigte Ebene umfasst, die mit einer zweiten geneigten Ebene gleitend in relativer Verbindung steht, die zur Innenwandung des wenigstens einen Segments (19) entsprechend dem wenigstens einen seiner Enden komplementär und fest damit verbunden ist.

5. Vorrichtung nach Anspruch 4, **dadurch gekennzeichnet, dass** der wenigstens eine Läufer (18) mit einem Mitnehmer (14, 33) kinematisch verbunden ist (24), der wiederum mit einem entsprechenden Nockenelement (13) verbunden ist, wobei das Nockenelement (13) so geformt ist, dass der wenigstens eine Läufer (18) mit hin- und herlaufender axialer Bewegung betätigt wird.

6. Vorrichtung nach Anspruch 5, **dadurch gekennzeichnet, dass** sie eine Einrichtung (22) zur Drehbetätigung des Nockenelements (15) bezüglich des Mitnehmers (33) umfasst.

7. Vorrichtung nach Anspruch 5 oder 6, **dadurch gekennzeichnet, dass** der Mitnehmer (33) des wenigstens einen Läufers (18) fest mit einer Scheibe (14) verbunden ist, die sich entlang der Achse des Trägerzylinders (4) verschieben lässt.

8. Vorrichtung nach einem der Ansprüche 3 bis 7, **dadurch gekennzeichnet, dass** die Mittel zur Erweiterung der Eingriffsfläche der ringförmigen Abspanung mehrere Segmente (19) mit wenigstens einem anhebbaren Ende umfassen und der Läufer (18) zum Antreiben der Bewegung der Segmente ein zum Trägerzylinder (4) coaxialer Ring ist.

9. Vorrichtung nach einem der vorstehenden Ansprüche, **dadurch gekennzeichnet, dass** der Mechanismus zur Schiebebetätigung des wenigstens einen Auswerfers (17) in Richtung parallel zur Achse des wenigstens einen Trägerzylinders wenigstens einen Mitnehmer (32) umfasst, der mit dem Auswerfer (17) kinematisch verbunden ist (16) und mit einem entsprechenden Nocken (12, 34) gekoppelt ist, wobei der Nocken (12, 34) so geformt ist, dass der wenigstens eine Auswerfer (17) mit hin- und herlaufender axialer Bewegung betätigt wird.

10. Vorrichtung nach einem der vorstehenden Ansprüche, **dadurch gekennzeichnet, dass** der wenigstens eine Auswerfer (17) einen ringförmigen Körper umfasst, der coaxial an dem wenigstens einen Trägerzylinder (4) befestigt ist.

11. Vorrichtung nach Anspruch 9 oder 10, **dadurch gekennzeichnet, dass** sie eine Einrichtung (22) zur Drehbetätigung des Nockens (12, 34) bezüglich des Mitnehmers (32) umfasst.

12. Vorrichtung nach den Ansprüchen 7 und 11, wobei das Nockenelement (13) für den Mitnehmer (33) des Läufers (18) des Mechanismus zum Antreiben der Bewegung des wenigstens einen Segments (19) und der Nocken (12, 34) für den Mitnehmer (32) des Auswerfers (17) gegenseitig fest verbunden sind.

13. Vorrichtung nach einem der vorstehenden Ansprüche, **dadurch gekennzeichnet, dass** das Gegenmesser (5) fest mit der Außenfläche des wenigstens einen Trägerzylinders (4) verbunden ist.

14. Verfahren zum Abscheren eines zylindrischen Hohlkörpers mit im Wesentlichen kreisförmigem Querschnitt, wobei das Verfahren von derjenigen Art ist, die folgende Schritte umfasst:
a) Einsetzen des zylindrischen Hohlkörpers zwischen wenigstens ein Messer und ein entsprechendes Gegenmesser auf einem geeigneten zylindrischen Träger in Richtung seiner eigenen Achse;
b) Inkontaktbringen des wenigstens einen Messers mit der Seitenfläche des zylindrischen Körpers entsprechend dem entsprechenden Gegenmesser;
c) Drehbetätigung des zylindrischen Körpers bezüglich des wenigstens einen Messers oder umgekehrt, wobei ein ringförmiger Abfallteil vom zylindrischen Hohlkörper abgeschnitten wird;
d) Wegbewegen des wenigstens einen Messers vom zylindrischen Körper;
e) Entfernen des gescherten zylindrischen Körpers; und
f) Auswerfen des ringförmigen Abfallteils;
wobei das Verfahren **dadurch gekennzeichnet ist, dass** es vor dem Schritt f) des Auswerfens des ringförmigen Abfallteils folgenden Schritt umfasst:
g) reversibles Erweitern wenigstens eines Teils der Eingriffsfläche des ringförmigen Abfallteils in der Nähe des Messers und/oder Gegenmessers in einer Richtung im Wesentlichen hin zur Achse des zylindrischen Trägers, um die Eingriffsfläche des ringförmigen Abfallteils durch Verformung nach außen aufzuweiten, ohne den ringförmigen Abfallteil zu schneiden.

15. Verfahren nach Anspruch 14, **dadurch gekennzeichnet, dass** der Schritt g) der reversiblen Erweiterung wenigstens eines Teils der Eingriffsfläche der ringförmigen Abspanung aus einer Ruheanordnung mit einem Durchmesser des wenigstens einen Teils der Eingriffsfläche, der im Wesentlichen kleiner ist als der Durchmesser des zylindrischen Hohlkörpers, in eine Betriebsstellung mit einem Durchmesser des wenigstens einen Teils der Eingriffsfläche erfolgt, der größer als oder gleich dem des zylindrischen Hohlkörpers ist.

16. Verfahren nach Anspruch 14 oder 15, **dadurch gekennzeichnet, dass** der Schritt f) des Auswerfens des ringförmigen Abfallteils einen Schubschritt des ringförmigen Abfallteils in seiner axialen Richtung bis hin zur Ablösung von dem geeigneten Träger ergibt.

17. Verfahren nach einem der Ansprüche 14 bis 16, **dadurch gekennzeichnet, dass** der Schritt a) des axialen Einsetzens des zylindrischen Hohlkörpers an dem geeigneten Träger die temporäre feste Verbindung des zylindrischen Hohlkörpers an dem Träger zumindest während der nachfolgenden Schritte b) und c) des Verfahrens ergibt.

18. Verfahren nach einem der Ansprüche 14 bis 17, **dadurch gekennzeichnet, dass** der Schritt g) des Erweiterns der Eingriffsfläche des ringförmigen Abfallteils sich so weit hinzieht, dass er zumindest teilweise mit dem Schritt f) des Auswerfens des ringförmigen Abfallteils zeitlich zusammenfällt.

## Revendications

1. Appareil de cisaillement de corps cylindriques creux ayant une coupe sensiblement circulaire, du type comprenant un cadre (1), au moins un cylindre de support (4) pour supporter au moins une partie d'un corps cylindrique creux, au moins une lame (27) et une contre-lame (5) associées à l'extérieur et à l'intérieur, ou vice versa, au dit corps cylindrique creux, ladite au moins une lame ou ladite contre-lame (5) étant contrainte sur ledit cylindre de support (4), au moins un assemblage d'éjection de copeau annulaire comprenant au moins un éjecteur (17) pouvant être déplacé par rapport à au moins un cylindre de support (4), ainsi qu'un premier dispositif (3, 21) pour actionner de manière rotationnelle, autour de l'axe dudit cylindre de support (4), ladite au moins une lame (27) par rapport au dit corps cylindrique creux, ou vice versa, et un mécanisme (12, 15, 16, 31) pour actionner de manière à pouvoir déplacer ledit au moins un éjecteur (17) dans une direction parallèle à l'axe dudit au moins un cylindre de support (4), **caractérisé en ce que** ledit assemblage d'éjection comprend un moyen (13, 14, 18, 19, 24, 25, 26, 33) pour étendre de manière réversible, dans une direction sensiblement incidente à l'axe du cylindre de support (4), au moins une partie de la surface de mise en prise pour ledit copeau annulaire, étant placé à proximité de ladite lame ou contre-lame (5) contrainte sur ledit cylindre de support (4).

2. Appareil selon la revendication 1, **caractérisé en ce que** ledit moyen (13, 14, 18, 19, 24, 25, 26, 33) pour étendre de manière réversible au moins une partie de la surface de mise en prise pour ledit copeau annulaire est formé pour élargir provisoirement ladite au moins une partie de ladite surface de mise en prise d'une configuration de repos avec un diamètre sensiblement inférieur au diamètre dudit corps cylindrique creux, à une position opérationnelle avec un diamètre supérieur ou égal à celui de ladite lame (27) ou contre-lame (5) contrainte sur ledit cylindre de support (4).

3. Appareil selon la revendication 1 ou 2, **caractérisé en ce que** ledit moyen pour étendre de manière réversible la surface de mise en prise pour ledit copeau annulaire comprend au moins un segment (19) associé à l'extérieur au dit au moins un cylindre de support (4), ledit segment (19) ayant au moins une extrémité pouvant se déplacer de manière réversible dans une direction incidente au dit axe dudit au moins un cylindre de support (4), ainsi qu'au moins un mécanisme (13, 14, 18, 24, 25, 26, 33) pour entraîner le déplacement de ladite au moins une extrémité dudit au moins un segment (19) dans ladite direction incidente, en s'écartant ou en se rapprochant de l'axe dudit au moins un cylindre de support (4).

4. Appareil selon la revendication 3, **caractérisé en ce que** ledit au moins un mécanisme pour entraîner le déplacement d'au moins une extrémité dudit au moins un segment (19) comprend au moins un curseur pouvant être déplacé axialement (18), ledit curseur (18) comprenant un premier plan incliné associé relativement de manière à pouvoir coulisser à un deuxième plan incliné complémentaire faisant partie intégrale de la paroi intérieure dudit au moins un segment (19), en correspondance avec ladite au moins une extrémité.

5. Appareil selon la revendication 4, **caractérisé en ce que** ledit au moins un curseur (18) est relié cinématiquement (24) à un suiveur (14, 33) associé à un élément de came correspondant (13), ledit élément de came (13) étant formé pour actionner ledit au moins un curseur (18) avec un déplacement axial en va-et-vient.

6. Appareil selon la revendication 5, **caractérisé en ce qu'**il comprend un dispositif (22) pour actionner de manière rotationnelle ledit élément de came (15) par rapport au dit suiveur (33).

7. Appareil selon la revendication 5 ou 6, **caractérisé en ce que** le suiveur (33) dudit au moins un curseur (18) fait partie intégrale d'un disque (14) pouvant être déplacé le long de l'axe dudit cylindre de support (4).

8. Appareil selon l'une quelconque des revendications 3 à 7, **caractérisé en ce que** ledit moyen d'extension de la surface de mise en prise dudit copeau annulaire comprend une pluralité de segments (19) ayant au moins une extrémité pouvant être soulevée, et ledit curseur (18) pour entraîner le déplacement desdits segments est un anneau coaxial au dit cylindre de support (4).

9. Appareil selon l'une quelconque des revendications précédentes, **caractérisé en ce que** ledit mécanisme pour actionner de manière à pouvoir déplacer ledit au moins un éjecteur (17) dans une direction parallèle à l'axe dudit au moins un cylindre de support comprend un suiveur (32) relié cinématiquement (16) au dit éjecteur (17), et couplé à une came correspondante (12, 34), ladite came (12, 34) étant formée pour actionner ledit au moins un éjecteur (17) avec un déplacement axial en va-et-vient.

10. Appareil selon l'une quelconque des revendications précédentes, **caractérisé en ce que** ledit au moins un éjecteur (17) comprend un corps annulaire monté de manière coaxial sur ledit au moins un cylindre de support (4).

11. Appareil selon la revendication 9 ou 10, **caractérisé en ce qu'**il comprend un dispositif (22) pour actionner de manière rotationnelle ladite came (12, 34) par rapport au dit suiveur (32).

12. Appareil selon les revendications 7 et 11, dans lequel ledit élément de came (13) pour le suiveur (33) dudit curseur (18) du mécanisme pour entraîner le déplacement dudit au moins un segment (19) et la came (12, 34) pour le suiveur (32) dudit éjecteur (17) font partie intégrale l'un de l'autre.

13. Appareil selon l'une quelconque des revendications précédentes, **caractérisé en ce que** ladite contre-lame (5) fait partie intégrale de la surface extérieure dudit au moins un cylindre de support (4).

14. Procédé de cisaillement d'un corps cylindrique creux ayant une coupe sensiblement circulaire du type comprenant les étapes consistant à :
a) insérer ledit corps cylindrique creux entre au moins une lame et une contre-lame correspondante sur un support cylindrique approprié dans la direction de son propre axe ;
b) mettre ladite au moins une lame en contact avec la surface latérale dudit corps cylindrique en correspondance avec ladite contre-lame correspondante ;
c) actionner de manière rotationnelle ledit corps cylindrique par rapport à ladite au moins une lame, ou vice versa, en découpant une partie annulaire de déchet dudit corps cylindrique creux ;
d) écarter ladite au moins une lame dudit corps cylindrique ;
e) enlever ledit corps cylindrique cisaillé ; et
f) éjecter ladite partie annulaire de déchet ;
le procédé étant **caractérisé en ce qu'**il comprend, avant ladite étape f) consistant à éjecter la partie annulaire de déchet, une étape consistant à :
g) étendre de manière réversible, dans une direction sensiblement incidente à l'axe dudit support cylindrique, au moins une partie de la surface de mise en prise de ladite partie annulaire de déchet, à proximité de ladite lame et/ou de ladite contre-lame pour élargir, par déformation vers l'extérieur, ladite surface de mise en prise de ladite partie annulaire de déchet, sans découper la ladite partie annulaire de déchet.

15. Procédé selon la revendication 14, **caractérisé en ce que**, à la ladite étape g), l'extension réversible d'au moins une partie de la surface de mise en prise dudit copeau annulaire se déroule à partir d'une configuration de repos avec un diamètre de ladite au moins une partie de la surface de mise en prise sensiblement inférieur au diamètre dudit corps cylindrique creux, à une configuration opérationnelle avec un diamètre de ladite au moins une partie de la surface de mise en prise supérieur ou égal à celui dudit corps cylindrique creux.

16. Procédé selon la revendication 14 ou 15, **caractérisé en ce que** ladite étape f) d'éjection de ladite partie annulaire de déchet prévoit une étape de poussée de ladite partie annulaire dans sa direction axiale jusqu'à la mise hors prise dudit support approprié.

17. Procédé selon l'une quelconque des revendications 14 à 16, **caractérisé en ce que** ladite étape a) d'insertion axiale dudit corps cylindrique creux sur ledit support approprié prévoit le montage intégral provisoire dudit corps cylindrique creux sur ledit support au cours au moins des étapes b) et c) suivantes dudit procédé.

18. Procédé selon l'une quelconque des revendications 14 à 17, **caractérisé en ce que** ladite étape g) d'extension de la surface de mise en prise de ladite partie annulaire de déchet se prolonge pour coïncider dans le temps, au moins partiellement, avec ladite étape f) d'éjection de ladite partie annulaire de déchet.
